# EUROPEAN PATENT APPLICATION

(11) **EP 3 075 712 A1**
(43) Date of publication of application: **05.10.2016**
(21) Application number: 16163233.6
(22) Date of filing: 31.03.2016
(51) Int. Cl.: C02F 1/42, B01J 39/04, B01J 41/04, B01J 47/04, C02F 1/70, G21F 9/12, C02F 101/10, C02F 103/02, C02F 101/00

(54) **CONDENSATE DEMINERALIZATION APPARATUS AND CONDENSATE DEMINERALIZATION METHOD**

(30) Priority: 31.03.2015 JP 2015071654
(71) Applicant: EBARA CORPORATION, Ohta-ku, Tokyo 144-8510 (JP)
(72) Inventor: IZUMI, Takeshi, Tokyo, 144-8510 (JP); DEGUCHI, Tatsuya, Tokyo, 144-8510 (JP); KOMATSU, Makoto, Tokyo, 144-8510 (JP)
(74) Representative: Emde, Eric

(57) **Abstract**

A condensate demineralization method for a condensate treatment of a nuclear power generation plant, characterized in that condensate is allowed to pass at a linear flow rate ranging from 20 m/h to 200 m/h through a condensate demineralization apparatus comprising an ion exchange resin layer filled therein wherein the ion exchange resin layer comprises a mixed bed of a strongly acidic cation resin and a strongly basic anion resin and a metal doped resin in a volume ratio ranging from 2% to 50% relative to the mixed bed.

## Description

The present invention relates to a condensate demineralization method and an apparatus for a nuclear power generation station plant, and in particular, relates to a condensate demineralization method and an apparatus that allow a pro-oxidant, such as hydrogen peroxide included in condensate, to be decomposed and removed.

In a nuclear power generation station plant, a condensate filtering apparatus using a hollow fiber membrane filter and a demineralization apparatus using a granular ion exchange resin are provided for the purpose of purifying condensate. This condensate demineralization apparatus is disposed for the purposes of, for example, inhibiting a nuclear reactor component from being corroded, and removing a radioactive substance in nuclear reactor water to thereby decrease the exposure dose of a worker.

In the condensate demineralization apparatus including the ion exchange resin, the ion exchange resin is required to be exchanged upon a reduction in the ion-exchanging capacity of the ion exchange resin, and in this case, not only the cost of a fresh ion exchange resin, but also a radioactive waste based on the used ion exchange resin is generated and therefore the cost and space in accordance with the treatment of the radioactive waste are required. Therefore, an increase in the lifetime of the ion exchange resin is desired.

Nuclear reactor water in a boiling water type nuclear power generation plant, however, includes hydrogen peroxide generated by decomposition of water due to irradiation with a radiation generated from a fuel rod, and a pro-oxidant such as a hydroperoxy radical and a hydroxy radical generated from such hydrogen peroxide (hereinafter, referred to as "pro-oxidant".). In addition, a pro-oxidant that goes through a turbine and a condenser from a nuclear reactor and is then present in the nuclear reactor is also present in condensate. The nuclear reactor water usually includes hydrogen peroxide in the order of several ppm to several hundreds ppm.

Such a pro-oxidant has a very strong oxidation action, and therefore oxidizes a cation resin of the ion exchange resin to elute polystyrene sulfonic acid (PSS). PSS eluted is attached to an anion exchange resin to reduce the reaction rate of the anion exchange resin. Furthermore, a cation exchange resin is oxidized and degraded by hydrogen peroxide, and therefore a sulfuric acid ion and the like are eluted from the cation exchange resin to result in an increase in conductivity at the outlet of the condensate demineralization apparatus.

It is considered that degradation of the ion exchange resin is mainly caused by oxidation of the cation exchange resin due to the contact with a pro-oxidant included in water. Then, there have been proposed a method including bringing water including a pro-oxidant into contact with an anion exchange resin before bringing it into contact with a cation exchange resin, and subjecting the pro-oxidant to alkali decomposition (Japanese Patent Laid-Open No. 2000-002787), a method including bringing water including a pro-oxidant into contact with granular activated carbon to remove the pro-oxidant, and a method including bringing water including a pro-oxidant into contact with an ion exchange resin on which a platinum group type catalyst particle is supported, to remove the pro-oxidant (Japanese Patent Laid-Open No. 10-111387), a method including allowing water including a pro-oxidant to pass through a membrane coated with a catalyst, the membrane being coated with platinum, to remove the pro-oxidant (Japanese Patent Laid-Open No. 2003-156589), a method including bringing water including a pro-oxidant into contact with activated carbon for adsorption, to remove the pro-oxidant (Japanese Patent Laid-Open No. 2008-232773), and a method including allowing water including a pro-oxidant to pass through a manganese filter, to remove the pro-oxidant (Japanese Patent Laid-Open No. 2014-071004). The methods that have heretofore been proposed, however, relate to a purification treatment of a radioactive liquid waste of a nuclear power generation plant, and an example has not been proposed in which such methods have been used for purification of condensate as a primary coolant. In addition, a measure has been taken in which an apparatus for removing the pro-oxidant is provided on the front stage of the condensate demineralization apparatus, thereby not to bring the pro-oxidant into contact with the ion exchange resin in the condensate demineralization apparatus, and a method has not been proposed in which a pro-oxidant flowing into the condensate demineralization apparatus is removed.

An object of the present invention is to decrease a pro-oxidant in condensate in a nuclear power generation plant to increase the lifetime of an ion exchange resin in a condensate demineralization apparatus, reducing the replacement frequency of the ion exchange resin.

The present invention provides a condensate treatment technique in a nuclear power generation plant, in which when water to be treated including a pro-oxidant such as hydrogen peroxide generated by radiation decomposition, generated in a nuclear reactor in a condensate demineralization apparatus for a nuclear power generation plant, is subjected to a demineralization treatment with an ion exchange resin, the water to be treated is brought into contact with a specific metal doped resin to decrease the pro-oxidant in the water to be treated, reducing the load on the ion exchange resin for use in the condensate demineralization apparatus to maintain the quality of water treated, at a high purity, and also increasing the lifetime of the ion exchange resin to decrease the amount of the used ion exchange resin, which causes a radioactive secondary waste, to be generated.

In an existing nuclear power generation plant, disposing a new treatment apparatus in which a metal doped resin is filled on the front stage of a condensate demineralization apparatus is not practical, due to not only a necessity of huge costs in an economic viewpoint, but also a limitation of space for disposing the treatment apparatus.

In addition, an ion exchange resin for use in such a condensate demineralization apparatus is required to be periodically subjected to a backwashing operation using water and air for the purpose of gradual consolidation during passing of water. Accordingly, even when the metal doped resin is positioned at the outermost layer of the ion exchange resin filled in the condensate demineralization apparatus, the metal doped resin is mixed with the ion exchange resin positioned at the lower layer during backwashing running and cannot be held at the uppermost layer. It has been considered that the metal doped resin is required to be arranged at the outermost layer in order to exert the effect of the metal doped resin, and therefore an example has not been reported in which the metal doped resin is used in the condensate demineralization apparatus.

The present inventors have found that, on the contrary, the metal doped resin can be mixed with the ion exchange resin to thereby decompose a pro-oxidant, reducing the load on the ion exchange resin to increase the lifetime of the ion exchange resin.

Specifically, the present invention includes the following aspects.
(1) A condensate demineralization method for a condensate treatment of a nuclear power generation plant, characterized in that condensate is allowed to pass at a linear flow rate ranging from 20 m/h to 200 m/h through a condensate demineralization apparatus comprising an ion exchange resin layer filled therein wherein the ion exchange resin layer comprises a mixed bed of a strongly acidic cation resin and a strongly basic anion resin and a metal doped resin in a volume ratio ranging from 2% to 50% relative to the mixed bed.
(2) The condensate demineralization method according to claim 1, characterized in that a metal which is doped on the resin is selected from a fine particle of palladium, platinum, manganese, iron or titanium.
(3) The condensate demineralization method according to claim 1 or 2, characterized in that the metal doped resin is a strongly basic gel type anion resin on which a metal selected from a fine particle of palladium, platinum, manganese, iron or titanium is doped.
(4) A condensate demineralization apparatus used for a condensate treatment of a nuclear power generation plant, characterized in that the apparatus comprises an ion exchange resin layer filled therein wherein the ion exchange resin layer comprises a mixed bed of a strongly acidic cation resin and a strongly basic anion resin and a metal doped resin in a volume ratio ranging from 2% to 50% relative to the mixed bed wherein the ion exchange resin layer being filled so as to allow condensate to pass at a linear flow rate ranging from 20 m/h to 200 m/h.
(5) The condensate demineralization apparatus according to claim 4, characterized in that a metal which is doped on the resin is selected from a fine particle of palladium, platinum, manganese, iron or titanium.
(6) The condensate demineralization apparatus according to claim 4 or 5, characterized in that the metal doped resin is a strongly basic gel type anion resin on which a metal selected from a fine particle of palladium, platinum, manganese, iron or titanium is doped.

The condensate demineralization method and apparatus for a nuclear power generation plant of the present invention can allow a pro-oxidant such as hydrogen peroxide generated due to radiation decomposition of water to be efficiently decomposed by a radiation generated in a nuclear reactor, thereby preventing oxidative degradation of the ion exchange resin filled in the condensate demineralization apparatus to maintain the quality of water treated at a high purity, and also increasing the lifetime of the ion exchange resin to decrease the amount of the used ion exchange resin, which causes a radioactive secondary waste, to be generated. A decrease in the volume of the radioactive secondary waste is an important object for a condensate treatment of a nuclear power generation plant, and the present invention that can achieve the object is of great significance.
FIG. 1 is a schematic configuration view illustrating flow of a primary coolant system in a boiling water type nuclear power generation plant; and
FIG. 2 is a schematic view illustrating schematic flow of a closed loop circulation apparatus used in Example 1.

Hereinafter, the present invention is described with reference to the accompanied drawings, but the present invention is not limited thereto.

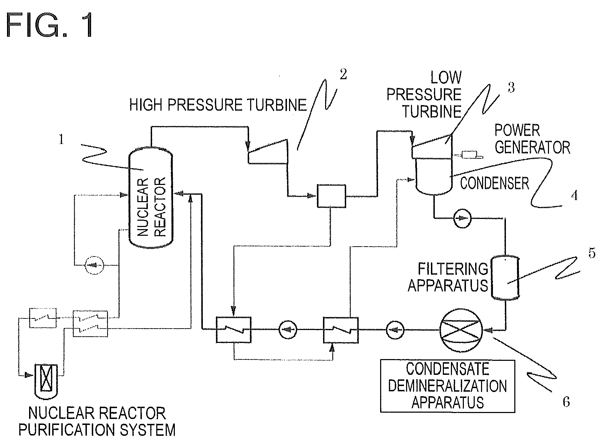

FIG. 1 illustrates flow of a primary coolant system in a boiling water type nuclear power generation plant.

A cyclic path is formed so that vapor generated in a nuclear reactor 1 is used in a high pressure turbine 2 and a low pressure turbine 3 for power generation, thereafter cooled in a condenser 4, purified in a condensate filtering apparatus 5 and a condensate demineralization apparatus 6, and returned to the nuclear reactor 1.

In the nuclear reactor 1, nuclear reactor water is subjected to radiation decomposition to generate a pro-oxidant such as hydrogen peroxide, a hydroxy radical, and a hydroxyperoxy radical. Such a pro-oxidant is moved in the cyclic path together with vapor, and therefore an ion exchange resin in the condensate demineralization apparatus 6 is oxidized and decomposed.

A strongly acidic cation resin and a strongly basic anion resin, which are in the mixed state (referred to as "mixed bed"), are usually filled in the condensate demineralization apparatus 6. A resin layer usually has a height of 800 mm to 2000 mm, and condensate is allowed to pass therethrough at a linear flow rate of water passing ranging from 20 m/h to 200 m/h, preferably ranging from 80 m/h to 130 m/h for purification and demineralization, and thereafter is returned to the nuclear reactor 1. In the condensate demineralization apparatus widely used in the boiling water type nuclear power generation plant, the resin layer has a height of about 1000 mm, and the linear flow rate of water passing is about 100 m/h.

In the present invention, a metal doped resin is mixed in the range from 2% to 50%, preferably in the range from 10% to 30% relative to the ion exchange resin mixed bed filled in the condensate demineralization apparatus 6 to decompose a pro-oxidant included in condensate to thereby reduce the load on the ion exchange resin.

The metal doped resin is preferably a strongly basic gel type spherical resin formed by supporting a metal particle selected from a fine particle of palladium, platinum, manganese, iron or titanium on a polymer resin. As the strongly basic gel type spherical resin, a commercially available product such as LEWATIT MonoPlus M500 (LEWATIT (registered trademark) MonoPlus M 500), LEWATIT ASB1 (LEWATIT (registered trademark) ASB1), Diaion (registered trademark) SA10A or Dowex (registered trademark) SBR-P can be suitably used. It is desirable that the amount of the metal particle to be doped be in the range from 0.1 g/L to 10 g/L, preferably in the range from 0.5 g/L to 5 g/L.

If the rate of the metal doped resin to be added to the mixed bed is less than 2%, the pro-oxidant cannot be sufficiently decomposed. The upper limit of the rate of the metal doped resin to be added is not particularly limited and is sufficiently about 50%. Even if the upper limit is more than 50%, the decomposition effect is not considerably increased, and therefore a proper rate thereof to be added can be determined in consideration of cost efficiency.

As the ion exchange resins that are filled for the mixed bed in the condensate demineralization apparatus 6, a strongly basic anion exchange resin and a strongly acidic cation exchange resin for use in a condensate demineralization apparatus in a usual nuclear power generation plant can be used.

Hereinafter, the present invention is more specifically described with reference to Examples.

### (Example 1)

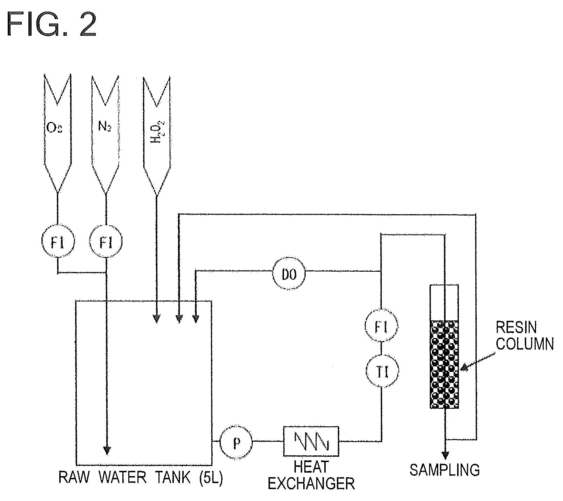

A closed loop test apparatus illustrated in FIG. 2 (in the Figure, "P" represented a pump, "DO" represented a dissolved oxygen meter, "FI" represented a flowmeter, and "TI" represented a thermometer) was used, pure water adjusted so that the hydrogen peroxide (H₂O₂) concentration was 5 mg/L in a raw water tank was circulated and allowed to pass through a resin column, TOC (total organic carbon) eluted from an ion exchange resin was concentrated in the system, the TOC concentration was measured over time, and the rate of TOC eluted from the ion exchange resin was evaluated. The TOC concentration was measured in a total organic carbon meter (TOC-V manufactured by Shimadzu Corporation). Main test conditions are as follows.
- Inner diameter of column: 25 mmΦ
- Linear flow rate of water passing: 40 m/h
- Temperature of water to be treated (pure water): 40°C
- Hydrogen peroxide concentration: 5 mg/L

Three kinds of resin columns shown in Table 1 were used, and the TOC concentration in passing of water for about 200 hours was measured, and evaluated based on a relative value under the assumption of the TOC concentration in Control 2 as "1". The respective ion exchange resins filled in the resin columns are as follows.
"Pd doped resin": Strongly basic gel type spherical anion exchange resin with about 1 g/L of Pd doped thereon (Lewatit (registered trademark) K7333 produced by Lanxess)
"Cation exchange resin": HCR-W2 H produced by Dow Chemical Company
"Anion exchange resin": SBR-PC OH produced by Dow Chemical Company

**[Table 1]**

| | Resin column | TOC concentration in passing of water for 200 hours | Relative value of TOC concentration |
|---|---|---|---|
| Example 1 | Mixed bed of 35 mL of Pd doped resin, 62 mL of cation exchange resin and 38 mL of anion exchange resin (rate of Pd doped resin filled: 25%) | 416 ppb | 0.4 |
| Control 1 | 35 mL of Pd doped resin filled at outermost layer of mixed bed of 62 mL of cation exchange resin and 38 mL of anion exchange resin | 95 ppb | 0.1 |
| Control 2 | Mixed bed of 62 mL of cation exchange resin and 38 mL of anion exchange resin | 1054 ppb | 1 |

In Control 1, hydrogen peroxide could be completely decomposed on the surface layer portion of the resin layer and therefore the TOC concentration could be decreased to about 1/10. In a filling mode in Control 1, however, backwashing regeneration was made to thereby mix the respective ion exchange resins, and therefore the filling mode in Control 1 could not be realized in the field operation of the condensate demineralization apparatus in which backwashing regeneration was required.

In Example 1, while the effect of decreasing the TOC concentration was less exerted than in Control 1, the TOC concentration could be decreased to four out of ten of that in Control 2. When the lifetime of the ion exchange resin is assumed to depend on only the TOC concentration, the lifetime of the resin can be improved up to 2.5 times. The condensate demineralization apparatus and the condensate demineralization method of the present invention can prevent oxidative degradation of the ion exchange resin in the condensate demineralization apparatus in which backwashing regeneration is required to be performed, to maintain the quality of water treated at a high purity, and also increase the lifetime of the ion exchange resin to decrease the amount of the used ion exchange resin, which causes a radioactive secondary waste, to be generated.

## Claims

1. A condensate demineralization method for a condensate treatment of a nuclear power generation plant, **characterized in that** condensate is allowed to pass at a linear flow rate ranging from 20 m/h to 200 m/h through a condensate demineralization apparatus comprising an ion exchange resin layer filled therein wherein the ion exchange resin layer comprises a mixed bed of a strongly acidic cation resin and a strongly basic anion resin and a metal doped resin in a volume ratio ranging from 2% to 50% relative to the mixed bed.

2. The condensate demineralization method according to claim 1, **characterized in that** a metal which is doped on the resin is selected from a fine particle of palladium, platinum, manganese, iron or titanium.

3. The condensate demineralization method according to claim 1 or 2, **characterized in that** the metal doped resin is a strongly basic gel type anion resin on which a metal selected from a fine particle of palladium, platinum, manganese, iron or titanium is doped.

4. A condensate demineralization apparatus used for a condensate treatment of a nuclear power generation plant, **characterized in that** the apparatus comprises an ion exchange resin layer filled therein wherein the ion exchange resin layer comprises a mixed bed of a strongly acidic cation resin and a strongly basic anion resin and a metal doped resin in a volume ratio ranging from 2% to 50% relative to the mixed bed wherein the ion exchange resin layer being filled so as to allow condensate to pass at a linear flow rate ranging from 20 m/h to 200 m/h.

5. The condensate demineralization apparatus according to claim 4, **characterized in that** a metal which is doped on the resin is selected from a fine particle of palladium, platinum, manganese, iron or titanium.

6. The condensate demineralization apparatus according to claim 4 or 5, **characterized in that** the metal doped resin is a strongly basic gel type anion resin on which a metal selected from a fine particle of palladium, platinum, manganese, iron or titanium is doped.
